# EUROPÄISCHE PATENTANMELDUNG

(11) **EP 0 886 150 A2**
(43) Veröffentlichungstag der Anmeldung: **23.12.1998**
(21) Anmeldenummer: 98111457.2
(22) Anmeldetag: 22.06.1998
(51) Int. Cl.: G02B 3/00

(54) **Fliegenaugenlupe**

(30) Priorität: 20.06.1997 DE 29710822 U
(71) Anmelder: WERKHAUS - DESIGN + PRODUKTION GmbH, 29562 Suhlendorf (DE)
(72) Erfinder: Danneberg, Holger, Molbath 29562 Suhlendorf (DE)
(74) Vertreter: WILHELMS, KILIAN & PARTNER Patentanwälte

(57) **Zusammenfassung**

Fliegenaugenlupe mit einer facettierten Linse mit einer Anzahl von Facettenfeldern, wobei die Linse in einen flächigen Träger einer Stärke von etwa 1 bis 5 mm und einer Fläche, etwa der 2- bis 6-fachen Linsenfläche entsprechend, eingelassen ist.

## Beschreibung

Die Neuerung betrifft ein neuartiges Spielzeug, das im folgenden als Fliegenaugenlupe bezeichnet wird.

Die neue Fliegenaugenlupe weist eine facettierte Linse in einem flächigen Träger auf, der vorzugsweise eine Stärke von etwa 1 bis 5 mm aufweist und dessen Fläche das etwa 2- bis 6-fache der Linsenfläche beträgt und wie es im Anspruch 1 dargestellt ist. Bevorzugte Ausgestaltungen der neuerungsgemäßen Fliegenaugenlupe ergeben sich aus den Ansprüchen 2 bis 5.

Das Linsenglas ist, wie ein Fliegenauge, in eine Vielzahl von Facetten aufgeteilt, die jeweils einzeln bei Durchsicht den betrachteten Gegenstand wiedergeben, so daß sich dem Betrachter der Gegenstand in der Anzahl der Segmente entsprechender vielfacher Wiedergabe darstellt.

Je nach Ausführungsform des Linsenglases können die einzelnen Facetten in gleicher Weise vergrößern, verkleinern oder den Gegenstand unvergrößert oder unverkleinert wiedergeben; in einer besonderen Ausführungsform können die einzelnen Facetten jedoch auch abweichend voneinander ausgebildet sein, so daß bei Durchsicht beispielsweise ein Ring von Facetten vergrößert, während die restlichen Facetten verkleinern oder umgekehrt oder vermischt.

Der flächige Träger kann bevorzugt als Tiermotiv ausgebildet sein, wobei die Linse in dem Tiermotiv als Tierauge positioniert wird; ebenso können andere Formen, beispielsweise Blumenformen gewählt werden, bei denen die Linse z.B. als Blütenstand positioniert wird. Darüber hinaus bietet die flächige Ausbildung des Trägers in nahezu beliebiger Form eine geeignete Unterlage für graphische oder werbemäßige vielfältige Gestaltungsmöglichkeiten.

Die Neuerung wird anhand der angefügten Figuren näher erläutert, wobei
Figur 1 eine Aufsicht auf eine Ausführungsform der neuerungsgemäßen Fliegenaugenlupe zeigt,
und Figur 2 einen Querschnitt durch die neuerungsgemäße Fliegenaugenlupe im Bereich der Linse Zeigt.

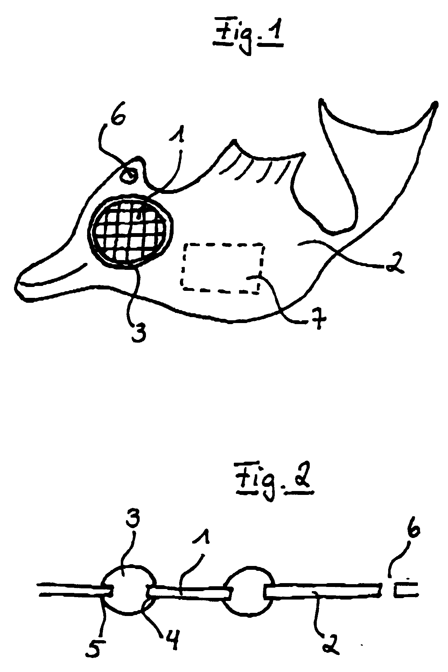

Gemäß Figur 1 besteht die neuerungsgemäße Fliegenaugenlupe aus einer in Facetten unterteilten Linse (1), wobei bevorzugt eine facettierte Kaleidoskoplinse verwendet wird.

Diese Linse (1) ist in einen flächigen Träger (2) eingelassen, der, abweichend von einem üblichen Lupengriff, ein Mehrfaches der Fläche der Linse ausmacht, wobei die Untergrenze etwa der 2-fachen, bevorzugt 3-fachen Linsenfläche entspricht. Die Obergrenze entspricht etwa dem 6-fachen der Linsenfläche, wobei hierbei von einem Linsendurchmesser von etwa 3 cm ausgegangen wird. Die Fixierung der Linse (1) im Träger (2) in der entsprechenden Ausnehmung kann in an sich bekannter Weise durch Verkleben, Einpressen oder (bei Ausbildung in Kunststoff) Einschweißen erfolgen; bevorzugt ist sie gemäß Figur 2 in der Innennut (4) eines umlaufenden elastischen Ringes (3) aus Gummi oder Kunststoff fixiert, während der umlaufende Rand der Ausnehmung im Träger (2) in einer außen umlaufenden Nut (5) des elastischen Ringes gelagert ist.

Auf diese Weise ist es möglich, die Fliegenaugenlupe als einfachen Bausatz zum Zusammenbau durch kleine Kinder auszubilden.

Bevorzugt weist der Träger (1) ein Loch oder eine Öse (6) auf, durch die ein Halsband oder eine Halskette zum Umhängen der Fliegenaugenlupe oder ein Schlüsselring zum Verwenden der Fliegenaugenlupe als Schlüsselanhänger geführt ist. Bei Bedarf ist ein Bereich (7) als Werbefläche gestaltet.

## Patentansprüche

1. Fliegenaugenlupe mit einer facettierten Linse mit einer Anzahl von Facettenfeldern, wobei die Linse (1) in einen flächigen Träger (2) einer Stärke von etwa 1 bis 5 mm und einer Fläche, etwa der 2- bis 6-fachen Linsenfläche entsprechend, eingelassen ist.

2. Fliegenaugenlupe gemäß Anspruch 1, dadurch gekennzeichnet, daß die Linse eine an sich bekannte Kaleidoskoplinse ist.

3. Fliegenaugenlupe gemäß Anspruch 1 oder 2, dadurch gekennzeichnet, daß sie einen ringförmigen Gummiwulst (3) aufweist, der eine innen umlaufende Nut (4) zur fixierenden Aufnahme des Randbereichs der Linse (1) und eine außen umlaufende Nut (5) zur fixierten Aufnahme des Randes der entsprechenden kreisförmigen Aussparung im flächigen Träger (2) aufweist.

4. Fliegenaugenlupe nach einem der vorhergehenden Ansprüche, dadurch gekennzeichnet, daß der flächige Träger (2) als Tiermotiv ausgebildet und die Linse (1) in dem Tiermotiv als Tierauge positioniert ist.

5. Fliegenaugenlupe nach einem der vorhergehenden Ansprüche, dadurch gekennzeichnet, daß zumindest ein Teil des Trägers (2) als Werbefläche (7) gestaltet ist.
